# EUROPÄISCHE PATENTSCHRIFT

(11) **EP 2 526 333 B1**
(45) Veröffentlichungstag und Bekanntmachung des Hinweises auf die Patenterteilung: **07.05.2014**
(21) Anmeldenummer: 11700238.6
(22) Anmeldetag: 06.01.2011
(51) Int. Cl.: F16L 59/20, C08G 101/00, C08G 18/48, C08G 18/76, C08G 18/09, C08G 18/18, C08G 18/22

(54) **POLYURETHAN-HARTSCHAUMSTOFFUMHÜLLUNG DER VERBINDUNGEN VON RÖHREN**
POLYURETHANE RIGID FOAM ENVELOPE FOR CONNECTION OF PIPES
ENVELOPPE DE MOUSSE DE POLYURÉTHANE RIGIDE POUR L'ASSEMBLAGE DE TUBES

(30) Priorität: 18.01.2010 EP 10150962
(43) Veröffentlichungstag der Anmeldung: 28.11.2012
(73) Patentinhaber: BASF SE, 67056 Ludwigshafen (DE)
(72) Erfinder: GRIESER-SCHMITZ, Christof, 49088 Osnabrück (DE); HUNTEMANN, Peter, 49448 Stemshorn (DE); HALWE-BOMMELMANN, Annika, 32369 Rahden (DE); LINDEMANN, Wilhelm, 32361 Preussisch Oldendorf (DE)
(86) Internationale Anmeldenummer: PCT/EP2011/050120
(87) Internationale Veröffentlichungsnummer: WO 2011/086025

(56) Entgegenhaltungen:
- WO-A1-00/39497
- DE-A1- 19 742 012
- US-A1- 2004 176 492
- US-A1- 2005 014 857

## Beschreibung

Die Erfindung betrifft die Verbindungen von mindestens zwei Röhren oder Teilen hiervon mit einem an die Verbindung angrenzenden Verbindungsbereich der Röhren bei dem der Verbindungsbereich von einem offenzelligen Polyurethanhartschaum mit Polyisocyanuratstrukturen umhüllt ist, sowie das entsprechende Verfahren zum Umschäumen der Röhren und die daraus hergestellten Röhrensysteme.

Mit Polyurethan-Hartschaumstoffen umgebene Rohre sind im Stand der Technik bekannt und beispielsweise in EP-A-865 893 und DE-A-197 42 012 beschrieben. Neben diesen gedämmten Rohren kommen auch beispielsweise für den Transport von Gas unterhalb der Wasseroberfläche Rohre zum Einsatz, die nicht gedämmt, sondern beispielsweise durch einen kompakten äußeren Mantel beispielsweise auf mineralischer und/oder organischer Basis umhüllt sind. In der Regel besteht ein solches Rohr aus mehreren Schichten. Die äußerste Schicht ist in der Regel Beton zum Schutz und zur Erhöhung des Gewichtes, damit die Rohre nicht aufschwimmen. Darunter befindet sich eine weitere Schicht bestehend aus z.B. Polypropylen, Polyethylen, Epoxydharz, Polyurethan-Coating oder Bitumen als Korrosionsschutz. An den Verbindungen solcher ungedämmten Rohre kann ein Schutz des Rohrs durch einen Polyurethan-Hartschaumstoff erfolgen, der gegebenenfalls von zumindest einer weiteren Schicht umgeben sein kann. Dieser so gestaltete Verbindungsbereich wird auch als Muffe angesprochen.

US 2004/176492 A offenbart die Verbindung von zwei Röhren, deren Verbindungsbereich von einem offenzelligen Polyurethan-Hartschaumstoff umhüllt ist, wobei die Schaumstoffumhüllung hergestellt wird durch Einfüllung einer Mischung von reaktiven Komponenten, enthaltend Polyetherpolyol, Urethanisierungs-Katalysatoren, polymeres MDI, Wasser als Blähmittel. einen Diester (TXIB) und einen Zellstabilisator In eine Form, die die Verbindungstellle umgibt.

In US 20051014857 A werden offenzellige geformte Polyurethan-Hartschäume, die Isocyanuratstrukturen aufweisen, beschrieben, sowie die Verwendung derartiger Schäume als Isolationsmaterial, beispielsweise für Rohre.

Die Herstellung dieser Muffen, d.h. unter anderem die Herstellung des Polyurethan-Hartschaumstoffes, erfolgt ebenso wie die Verbindung der Mediumrohre üblicherweise direkt vor dem Verlegen der Rohre an Bord eines Verlegeschiffes. Aufgrund der hohen Betriebs- bzw. Mietkosten der Verlegeschiffe besteht ein permanenter und hoher Rationalisierungsbedarf bei der Herstellung und Verlegung der Rohre. Gleichzeitig müssen auch die Verbindungsstellen (Muffen) so beschaffen sein, dass sie das innenliegende Rohr bei punktueller Belastung, wie sie beispielsweise bei einem Stoß mit einem Anker oder einem Schlepp-Netz entstehen können, vor Zerstörung schützen. Eine entsprechender Belastungstest ist der Impact-Test nach DNV-RP-F111 ("Interference Between Trawl Gear And Pipelines").

Aufgabe der Erfindung war es daher Verbindungen von Röhren oder Teilen hiervon so auszugestalten, dass sie einfacher und schneller herstellbar sind, den mechanischen Anforderungen, die an die Rohre gestellt werden, entsprechend dem oben genannten "Impact-Test" (DNV-RP-F111) erfüllt werden und zudem einen geringen Auftrieb haben.

Eine weitere Aufgabe der Erfindung lag darin, den gesundheitsschädlichen, oft auch toxischen, cancerogenen oder erbgutverändernden, Flüssigmodifizierer "liquid modifier", wie beispielsweise in US 5489405 genannt, zu vermeiden. Bei den Flüssigmodifizierern "liquid modifier" handelt es sich oft um Mischungen aus niedrigsiedenden Erdölfraktionen (z.B. Enerdex 81 von BP) oder Phthalate (z.B. Bis(2-ethylhexyl)-phthalat). Weiterhin war es Aufgabe die Verarbeitbarkeit der für die Polyurethanherstellung verwendeten Systeme zu verbessern. Systeme, die einen-Flüssigmodifizierer enthalten, bilden nach sehr kurzer Zeit, häufig in weniger als 30 min, zwei Phasen. Systeme ohne diesen sind bis zu drei Tage stabil. Das bietet Vorteile beim Transport und bei der Verarbeitung.

Erfindungsgemäß wird diese Aufgabe gelöst, indem die Verbindung von mindestens zwei Röhren oder Teilen hiervon, bevorzugt ganzen Röhren, die einen an die Verbindung angrenzenden Verbindungsbereich aufweisen, in diesem Verbindungsbereich mit offenzelligem Hartschaumstoff umhüllt sind, der ein Polyurethanschaumstoff mit Polyisocyanatstrukturen ist. Das zugehörige Herstellungsverfahren sowie die Verwendung von diesem offenzelligem Hartschaumstoff zur Umhüllung von Röhren insbesondere der Verbindungsstelle zwischen zwei Röhren ist ebenfalls Erfindungsgegenstand.

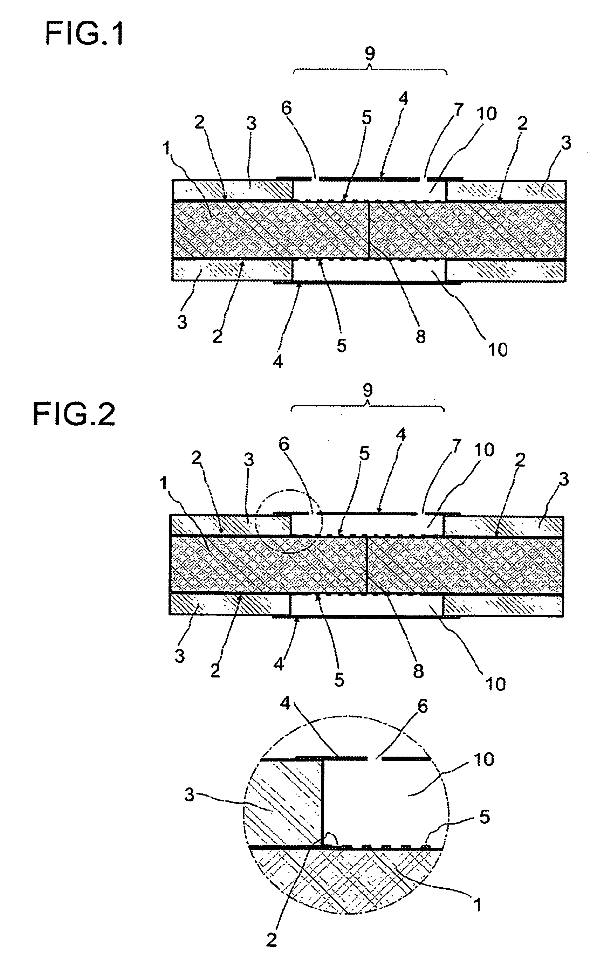

Figur 1: Diese Figur zeigt den Flächenschnitt durch die Achse zweier Röhren (1), die von einer Antikorrosionsschicht (2) und von einem Mantel (3) umgeben und miteinander verbunden sind (Verbindung (8). In dem um die Verbindung (8) herumliegenden Verbindungsbereich (9) der Röhren ist eine zweite Antikorrosionsschicht (5) aufgetragen und der Raum zwischen dieser Antikorrosionsschicht und der Hülle (4) ist mit offenzelligem Hartschaum (10) ausgefüllt. Die Hülle (4) hat ein Einfüllloch (6) und ein Entlüftungsloch (7).

Auch Figur 2 zeigt den Flächenschnitt durch die Achse zweier Röhren (1), die von einer Antikorrosionsschicht (2) und von einem Mantel (3) umgeben und miteinander verbunden sind (Verbindung (8). In dem um die Verbindung (8) herumliegenden Verbindungsbereich (9) der Röhren ist eine zweite Antikorrosionsschicht (5) aufgetragen, die im Verbindungsbereichen (9) zumindest teilweise die Antikorrosionsschicht (2) überdeckt. Der Raum zwischen der Antikorrosionsschicht (5) ggf. auch (2) und der Hülle (4) ist mit offenzelligem Hartschaum (10) ausgefüllt. Die Hülle (4) hat ein Einfüllloch (6) und ein Entlüftungsloch (7).

Die Röhren (1) können im Querschnitt jegliches Profil aufweisen. In einer bevorzugten Ausführungsform handelt es sich bei der Röhre (1) um eine ungedämmte Röhre. In einer weiter bevorzugten Ausführungsform ist die Röhre ein Rohr, d.h. die Röhre hat einen um ihre Achse konzentrischen Aufbau. Das Rohr hat dann bevorzugt einen äußeren Durchmesser von 6" bis 52", bevorzugt 10" bis 48" und besonders bevorzugt 16" bis 42", wobei ein Zoll ["] 2,54 cm entspricht.

Bevorzugt sind die mindestens zwei Röhren (1) aus Stahl. Die Röhren (1) sind in einer bevorzugten Ausführungsform von einer Antikorrosionsbeschichtung (2) umgeben, die aus einer oder mehreren Lagen besteht. In einer weiteren bevorzugten Ausführungsform hat die ein- oder mehrschichtige Antikorrosionsbeschichtung (2) eine Stärke von 0,1 cm bis 2,0 cm, bevorzugt von 0,2 cm bis 1,5 cm und besonders bevorzugt 0,3 cm bis 1,0 cm.

Die Antikorrosionsbeschichtung (2) und/oder (5) ist bevorzugt aus Bitumen, Polyethylen, Polypropylen, Polyurethan oder Expoxydharz. In einer weiteren bevorzugten Ausführungsform liegt eine Antikorrosionsbeschichtung auch auf der Innenseite der Röhren (1) vor.

Unter dem Ausdruck "ungedämmte Röhre" ist in dieser Schrift zu verstehen, dass die Röhren mit Ausnahme der erfindungsgemäßen Verbindungen nicht von einem Schaum, insbesondere nicht von einem offenzelligen Hartschaum umhüllt sind. D.h. bei den ungedämmten Röhren handelt es sich um Röhren, die bevorzugt nicht mit einer thermischen Dämmung in Form eines geschlossenzelligen Hartschaumstoffs ausgestattet sind. Teile von Röhren, die mit entsprechenden anderen Teilen von Röhren verbunden sind, sind ebenfalls von der Erfindung umfasst. In einer bevorzugten Ausführungsform betrifft die Erfindung jedoch mindestens zwei verbundene Röhren.

Die Röhren (1) werden bevorzugt zum Transport von Medien wie Gas, Flüssigkeiten und/oder Schüttgut verwendet, bevorzugt für Gas und sie sind bevorzugt rund. Aus diesem Grund wird im Zusammenhang mit dieser Erfindung auch von Mediumrohren gesprochen.

Zur Definition der Verbindung zweier Röhren wird auf die DIN EN 489 verwiesen, soweit diese für die vorliegenden Röhren zur Anwendung kommt. Bei "Verbindungsstelle" handelt es sich um die Stelle, an der zwei Röhren miteinander verbunden sind, bevorzugt ist die Verbindungsstelle eine Schweißnaht zwischen zwei Röhren.

Erfindungsgemäß ist das Mediumrohr im Bereich der Verbindungsstelle (8) zwischen zwei Röhren (1) durch den offenzelligen Hartschaumstoff umhüllt, der ein Isocyanuratstrukturen enthaltender Polyurethan-Hartschaumstoff ist. Bevorzugt wird die Verbindung hergestellt indem man mindestens zwei Röhren an ihren Enden verschweißt. Dadurch fehlt in diesem Verbindungsbereich (9) zumindest teilweise die Antikorrosionsschicht. In einer bevorzugten Ausführungsform wird nun auch in diesem Verbindungsbereich (9) eine zweite Antikorrosionsschicht (5) aufgetragen, Diese zweite Antikorrosionsschicht besteht bevorzugt aus Bitumen, Polyethylen, Polypropylen, Polyurethan-Coating oder Expoxydharz. Dabei ist diese zweite Antikorrosionsschicht (5) in einer Ausführungsform aus demselben Material wie die Antikorrosionsschicht, die die Röhre (1) im übrigen Bereich umgibt. In einer anderen Ausführungsform ist die Antikorrosionsschicht (2) und die Antikorrosionsschicht (5) aus unterschiedlichem Material. In einigen Ausführungsformen überlappen sich die beiden Antikorrosionsschichten zumindest teilweise.

Die Verbindung (8) und der Verbindungsbereich (9) sind mit dem offenzelligen umhüllt Polyurethanschaumstoff, der Isocyanuratstrukturen enthält. Bevorzugt wird jede Röhre (1) im Verbindungsbereich (9) bis zu einem Abstand zwischen 5 cm und 60 cm, jeweils gemessen von der Verbindungsstelle, von dem offenzelligen Hartschaumstoff umhüllt, der bevorzugt Isocyanuratstrukturen enthaltender Polyurethan-Hartschaumstoff ist.

Als beschichtete Röhren (1) werden bevorzugt solche eingesetzt, die bevorzugt mit Ausnahme ihrer Enden, mit einem kompakten Material bevorzugt auf mineralischer und/oder organischer, besonders bevorzugt mineralischer Basis umhüllt sind. Dabei wird der Bereich an den Enden der Röhren, an dem kein kompaktes Hüllmaterial vorliegt, nach dem Verbinden der Enden, bevorzugt Verschweißen der Enden, und bevorzugt dem Aufbringen einer geeigneten Antikorrosionsbeschichtung mit dem offenzelligen Isocyanuratstrukturen enthaltenden Polyurethan-Hartschaumstoff umhüllt.

Bevorzugtes kompaktes mineralisches Material ist eisenarmierter Beton. Als bevorzugtes kompaktes organisches Material sind Epoxydharze oder Polyethylenschaum zu nennen. Besonders bevorzugt sind somit Röhren, bei denen zwischen mineralischer Umhüllung und Stahlinnenrohr eine Antikorrosionsbeschichtung auf Basis Bitumen, Epoxydharz, Polyurethan, Polyethylen und/oder Polypropylen vorliegt.

Bevorzugt liegt der offenzellige Isocyanuratstrukturen enthaltenden Polyurethan-Hartschaumstoff zwischen Mediumrohr und einer äußeren Hülle (4) auf Basis Polyethylen oder Polypropylen oder Metallblech vor. Diese äußere Hülle (4) hat bevorzugt eine Dicke von 0,1 cm bis 1 cm. Dies bedeutet, wie an späterer Stelle beschrieben, dass der offenzellige Hartschaumstoff bevorzugt in einem Hohlraum zwischen Röhre (1) und äußerer Hülle (4) hergestellt wird, der seitlich durch das kompakte Material begrenzt wird.

Die äußere Kontur des offenzelligen Hartschaumstoffes im Verbindungsbereich (9) entspricht in einer bevorzugten Ausführungsform der äußere Kontur der verbundenen Röhren in diesem Bereich, in einem bevorzugten Bereich in dem es sich um die Verbindung zweier Rohre handelt liegt der äußere Durchmesser im Verbindungsbereich (9) zwischen 8" und 64". Dabei bedeutet der äußere Durchmesser den Durchmesser, der zwischen den äußeren Rändern des Polyurethan-Hartschaumstoffs oder, wenn dieser von Hülle (4) bedeckt ist, zwischen den äußeren Rändern der Hülle.

Mindestens ein Einfüllloch (6) dient zum Befüllen des zwischen verbunden Röhren, ggf. mit Antikorrosionsschicht (5), ggf. seitlichem Mantel (4) aufgespanntem Hohlraum. Mindestens ein zweites Loch dient der Entlüftung (Entlüftungsloch (7)). Der Einfüllvorgang des Systems aus dem der offenzellige Hartschaum entsteht, erfolgt bevorzugt mit einer Polyurethan-Maschine unter Hochdruck. Zur Befüllung bedient man sich Drücken von 80 bar bis 180 bar, weiter bevorzugt von 100 bar bis 160 bar, und besonders bevorzugt von 100 bar bis 140 bar.

Der offenzellige Hartschaum, der die Verbindung zweier Röhren umgibt, ggf. mit der darum befindlichen Hülle wird auch als Muffe bezeichnet.

Wie bereits dargestellt, handelt es sich bei den Röhren (1) bevorzugt um Gasleitungen, die bevorzugt unterhalb der Wasseroberfläche verlegt sind und weiter bevorzugt nicht gedämmt sind, d.h. die außerhalb des Bereichs der Hülle (4) nicht von einem geschlossenzelligen Hartschaum, bevorzugt aus Polyurethan umhüllt sind.

Besonders bevorzugt sind Verbindungen, die zwei Stahlmediumrohre aufweisen, deren Enden miteinander verschweißt sind und bei denen offenzelliger Hartschaum, bevorzugt Isocyanuratstrukturen enthaltender Polyurethan-Hartschaumstoff, zwischen dem mit einer Antikorrosionsschicht beschichteten Röhren (1) und einem Mantel und einer Hülle (4) vorliegt.

Die erfindungsgemäße Verbindung liegt bevorzugt in Rohrleitungen bevorzugt mit Längen von mindestens 0,5 km vor, besonders bevorzugt in Gasleitungen, insbesondere in Gasleitungen, die unter Wasser vorliegen.

Die bevorzugte Herstellung des offenzelligen Isocyanuratstrukturen enthaltenden Polyurethan-Hartschaumstoffes erfolgt durch Umsetzung einer Isocyanatkomponente (a) mit einer Polyolmischung (b). Dabei enthält die Polyolmischung (b) bevorzugt (b1) Polyole, (b2) Katalysatoren sowie gegebenenfalls (b3) chemische und/oder physikalische Treibmittel, (b4) Vernetzer, (b5) Kettenverlängerungsmittel, (b6) Zellregulatoren und/oder (b7) Zusatzstoffe. Die Mischung dieser aufgezählten Bestandteile wird auch als Polyurethansystem angesprochen.

Wie bereits dargestellt sind die mindestens zwei Röhren außerhalb des Verbindungsbereiches (9), in dem es vom offenzelligen Isocyanuratstrukturen enthaltenden Polyurethan-Hartschaumstoff umhüllt ist, bevorzugt von einem kompakten mineralischen und/oder organischen Material umschlossen (Mantel 3). Bevorzugt sind Verfahren, bei denen man in dem Verbindungsbereich (9) zwischen mindestens zwei Röhren (1), die von einem Mantel (4) umschlossen sind, eine Hülle (4) so über den Mantel (3) legt, dass zwischen verbundenen Röhren und Hülle (4) ein Hohlraum entsteht. Bevorzugt werden Lücken, die zwischen dem Mantel und der Hülle entstehen abgedichtet. In der Hülle (4) befindet sich wenigstens eine Öffnung, durch die das Polyurethansystem gefüllt wird. In einer Ausführungsform ist diese Öffnung so groß, dass gleichzeitig beim Einfüllen des Polyurethansystems die verdrängte Luft entweichen kann. In anderen Ausführungsformen weist die Hülle (4) wenigstens eine weitere Öffnung auf (Entlüftungsloch (7), durch die die Luft beim Einfüllvorgang entweichen kann. Durch Umsetzung des Polyurethansystems entsteht ein offenzelliger Isocyanuratstrukturen enthaltender Polyurethan-Hartschaumstoff. In einer bevorzugten Ausführungsform verbleibt die Hülle (4) auch nach dem Aushärten des offenzelligen Hartschaumstoffes an der Verbindung. In einer anderen Ausführungsform wird die Hülle (4) wieder entfernt und ist weiter bevorzugt wieder verwendbar. Dabei kann man als Hülle (4) bevorzugt eine Polyethylenfolie, eine Polypropylenfolie oder ein Metallblech einsetzen, wobei die Öffnung zum Entlüften bevorzugt am höchsten Punkt angeordnet ist. Bevorzugt werden Folien oder Blech mittels Spanngurten auf dem kompakten mineralischen Material fixiert.

Den oben beschriebenen Hohlraum zwischen Röhren und Hülle füllt man mit der Isocyanatkomponente (a) und der Polyolmischung (b) ggf. weiteren Komponenten bevorzugt mittels einer Polyurethan-Dosiermaschine, die nach dem Hoch- oder Niederdruck arbeitet.

Diese Ausgangsstoffe für das Polyurethansystem werden nachfolgend dargestellt:
Als Isocyanatkomponente (a) kommen die üblichen aliphatischen, cycloaliphatischen und insbesondere aromatischen Di- und/oder Polyisocyanate zum Einsatz. Bevorzugt insbesondere Gemische aus Diphenylmethandiisocyanat und Polyphenylenpolymethylenpolyisocyanaten (Roh-MDI), in einer anderen bevorzugt verwendeten Ausführungsform Diphenylmethandiisocyanat (MDI). Die Isocyanate können auch modifiziert sein, beispielsweise durch Einbau von Uretdion-, Carbamat-, Isocyanurat-, Carbodiimid-, Allophanat- und insbesondere Urethangruppen. Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt. Zur Herstellung von Polyurethan-Hartschaumstoffen wird insbesondere Roh-MDI eingesetzt. In einer bevorzugten Ausführungsform wird die Isocyanatkomponente (a) so gewählt, dass sie eine Viskosität weniger als 600 mPas, bevorzugt von 100 bis 600, besonders bevorzugt von 120 bis 400, insbesondere von 180 bis 320 mPas, gemessen nach DIN 53019 bei 25°C, aufweist.

Als mit Polyisocyanate reaktive Verbindung (Bestandteil oder Komponente b) können allgemein für diesen Zweck bekannte Polyole zum Einsatz kommen. In Betracht kommen z.B. Verbindungen mit mindestens zwei gegenüber Isocyanat reaktiven Gruppen, das heißt mit mindestens zwei mit Isocyanatgruppen reaktiven Wasserstoffatomen. Beispiele hierfür sind Verbindungen mit OH-Gruppen, SH-Gruppen, NH-Gruppen und/oder NH₂-Gruppen. Bevorzugte mit Polyisocyanaten reaktive Verbindungen sind Polyole (Bestandteil b1 oder Komponente b1) Als Polyole (b1) kommen bevorzugt Verbindungen auf Basis von Polyesterolen und/oder Polyetherolen zum Einsatz. Die Funktionalität der Polyetherole und/oder Polyesterole beträgt im Allgemeinen 1,9 bis 8, bevorzugt 2,2 bis 6, besonders bevorzugt 2,3 bis 5. Die Polyole (b1) weisen eine Hydroxylzahl von größer als 70 mg KOH/g, bevorzugt größer als 100 mg KOH/g, besonders bevorzugt größer als 150 mg KOH/g auf, ganz besonders bevorzugt 200 mg KOH/g. Als Obergrenze der Hydroxylzahl hat sich im allgemeinen 600 mg KOH/g, bevorzugt 500 mg KOH/g, besonders 400 mg KOH/g, ganz besonders bevorzugt 350 mg KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Überraschend konnte festgestellt werden, dass erfindungsgemäß eine für PIR-Systeme sehr niedrige Kennzahl ausreicht, um die Ziele in den eingangs formulierten Aufgaben zu erreichen.

Entgegen der allgemeinen Erfahrung, dass PIR-Systeme schlechte Fließeigenschaften haben, reicht die Fließfähigkeit (Formfüllvermögen) des erfindungsgemäßen Schaumes auch aus, um auch große Röhrendurchmesser, wie die erfindungsgemäß bevorzugten Durchmesser, zu füllen.

Es ist ferner überraschenderweise möglich die OHZ so niedrig einzustellen, dass das volumetrische Mischungsverhältnis, d. h. das Verhältnis der Polyolkomponente und Isocyanat-Komponente bei ca. 1:1 liegt und trotzdem bei geringen Mengen an PIR-Katalysator die PIR-Reaktion ausreichend abläuft, um die gewünschten Festigkeitsgewinne zu erzielen.

Dies ist sehr vorteilhaft, da so bestehende Verarbeitungsmaschinen ohne Aufwand den erfindungsgemäß bevorzugten Schaum verarbeiten können und die zu verarbeitenden Mengen der einzelnen Komponenten annähernd gleich groß sind, was aus logistischen gründen bei Offshore-Projekten von großer Bedeutung ist.

Bevorzugt enthält die Komponente (b1) Polyetherpolyole, die nach bekannten Verfahren, beispielsweise durch anionische Polymerisation mit Alkalihydroxiden, wie Natriumoder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche. Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden. Bevorzugt werden als Startermolekül Diethylenglykol, Propylenglykol, Penta-erythrit und Glycerin verwendet.
In einer Ausführungsform enthält die Polyolkomponente (b1) nur ein Polyol, in einer bevorzugten Ausführungsform besteht die Komponente (b1) aus einem Gemisch mehrerer Polyole.

Unter Katalysatoren (b2) werden einerseits Katalysatoren verstanden, die die Reaktion der Isocyanate mit den Polyolen beschleunigen (b2a) als auch solche, die die Trimerisierung von Isocyanaten, also die Bildung von Polyisocyanurat (PIR) begünstigen (b2b), die auch als Trimerisierungskatalysator angesprochen werden. Die Katalysatoren b2a und b2b werden in jeweils einer bevorzugten Ausführungsform einzeln, in einer anderen bevorzugten Ausführungsform gemeinsam eingesetzt.

Bevorzugt wird dem Polyol mindestens ein Trimerisierungskatalysator (b2a) zugegeben.

Als PIR-Katalysator (b2b) werden vorzugsweise Alkali- und/oder Erdalkalimetallverbindungen, bevorzugt Alkalimetallsalze, wie beispielsweise Kaliumacetat, Kaliumoctoat und Kaliumformiat, verwendet. Weitere bevorzugt zu verwendende Alkaliverbindungen sind u.a. Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Besonders bevorzugt ist als Alkalimetallverbindung Kaliumacetat.

In einer alternativen bevorzugten Ausführungsform werden als Trimerisierungskatalysatoren (b2b) PIR-Katalysatoren, wie Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid eingesetzt.

In einer weiteren bevorzugten Ausführungsform werden die Alkali- und/oder Erdalkalimetallverbindungen, bevorzugt Alkalimetallverbindungen und PIR-Katalysatoren, wie Tris-(dialkylaminoalkyl)-s-hexahydrotriazine, insbesondere Tris-(N,N-dimethylaminopropyl)-s-hexahydrotriazin, Tetraalkylammoniumhydroxide, bevorzugt Tetramethylammoniumhydroxid gemeinsam eingesetzt.

Als Katalysatoren (b2a) werden zur Herstellung der Hartschäume insbesondere Verbindungen verwendet, die die Reaktion der reaktiven Wasserstoffatome, insbesondere hydroxylgruppenenthaltender Verbindungen der Komponenten (b1) und gegebenenfalls (b4) und/oder (b5) mit den organischen, gegebenenfalls modifizierten Polyisocyanaten (a) stark beschleunigen

In einer bevorzugten Ausführungsform werden als Katalysatoren (b2a) basische Aminverbindungen, bevorzugt tertiäre Amine, wie beispielsweise Dimethylbenzylamin, und/oder Dimethylcyclohexylamin eingesetzt.

Als aminische Katalysatoren werden bevorzugt stark basische Amine eingesetzt. Bevorzugt sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, N,N,N',N'-tetramethyl-2,2'oxybis(ethylamin), Methylbis(2-dimethylaminoethyl)amin, Bis-(dimethyldiethylaminoethyl)ether, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan, und Aminoalkanolverbindungen, wie Triethanolamin, Triisopropanolamin, N-Methyl- und N-Ethyldiethanolamin und Dimethylethanolamin, die als Gel und/oder als Treibkatalysatoren dienen, die neben der Gelreaktion auch die Reaktion des Isocyanates mit dem Wasser favorisieren. Andere bevorzugte Gelkatalysator sind Diazabicycloundecan, 1,4Diazabicyclo-(2,2,2)-octan (Dabco), 1-methylimidazol und weiter bevorzugt Dimethylcyclohexylamin.

Die Katalysatoren (b2b) werden im Allgemeinen in einer Menge von 0,001 Gew.-% bis 2 Gew.-%, bevorzugt von 0,01 Gew.-% bis 1 Gew.-%, besonders bevorzugt 0,01 Gew.-% bis 0,5 Gew.-%, ganz besonders bevorzugt von 0,01 Gew.-% bis 0,3 Gew.-% Katalysator, bezogen auf das Gewicht der Polyolmischung (b) (jedoch ohne physikalische Treibmittel), eingesetzt.

Überraschend wurde festgestellt, dass auch die oben genannten, sehr geringen Mengen an PIR-Katalysator ausreichen, um die in den Aufgaben formulierten Ziele zu erreichen.

Ebenfalls wurde überraschend festgestellt dass sich die PIR-Reaktion nicht negativ auf die Offenzelligkeit des Schaumes auswirkt.

Die Komponente (b) enthält als Bestandteil (b3) chemische und/oder physikalische Treibmittel. Bevorzugt werden chemische Treibmittel eingesetzt. Bevorzugt sind Wasser oder Carbonsäuren, bevorzugt Ameisensäure. Besonders bevorzugtes chemisches Treibmittel ist Wasser. Das chemische Treibmittel wird im allgemeinen in einer Menge von 0,1 bis 3 Gew.-%, insbesondere von 0,2 bis 2,0 Gew.-%, besonders bevorzugt 0,3 bis 1,5 Gew.-% bezogen auf das Gewicht der Komponente (b), bevorzugt-Polyolmischung (b) (jedoch ohne physikalische Treibmittel), eingesetzt.

Wie vorstehend erwähnt enthält die Polyolmischung in einer anderen Ausführungsform physikalisches Treibmittel. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich bevorzugt um Kohlenwasserstoffe, halogenierte Kohlenwasserstoffe, und perfluorierte Alkane, wie Perfluorhexan, Fluorchlorkohlenwasserstoffe, sowie Ether, Ester, Ketone und/oder Acetale. Diese werden bevorzugt in einer Menge von 0,01 Gew.-% bis 20 Gew.-%, weiter bevorzugt 0,1 Gew.-% bis 15 Gew.-%, besonders bevorzugt 0,5 bis 10 Gew.-%, bezogen auf das Gesamtgewicht der Komponenten b) eingesetzt. Besonders bevorzugt werden Fluorkohlenwasserstoffe als Treibmittel eingesetzt.

In einer bevorzugten Ausführungsform enthält die Polyolmischung (b) als Bestandteil (b6) Zellregulierer. Unter Zellregulierem versteht man Verbindungen, die während des Schäumprozesses die Zellentwicklung, Zellstabilisierung sowie die anschließende Zellöffnung beeinflussen Ein Beispiel hierfür ist Ortegol 501 (Fa. Goldschmidt).
Die Zellregulierer werden im allgemeinen in einer Menge von 0,01 bis 8 Gew.-%, bevorzugt von 0,02 bis 6 Gew.-%, besonders bevorzugt von 0,05 bis 4 Gew.-% bezogen auf das Gesamtgewicht der Polyolmischung (b) (jedoch ohne physikalische Treibmittel), eingesetzt. Es kann auch eine Mischung verschiedener Zellregulierer Einsatz finden.

In einer weiteren bevorzugten Ausführungsform enthält die Polyolmischung (b) als Bestandteil (b4) Vemetzer. Unter Vernetzer werden Verbindungen verstanden, die ein Molekulargewicht von 60 g/mol bis weniger als 400 g/mol aufweisen und mindestens 3 gegenüber Isocyanaten reaktive Wasserstoffatome aufweisen. Ein Beispiel hierfür ist Glycerin. Die Vernetzer werden im Allgemeinen in einer Menge von 1 Gew.-% bis 10 Gew.-%, bevorzugt von 2 Gew.-% bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vemetzungsdichte dienen. Unter Kettenverlängerungsmittel werden Verbindungen verstanden, die ein Molekulargewicht von 60 g/mol bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Die Kettenverlängerungsmittel werden im Allgemeinen in einer Menge von 1 Gew.-% bis 20 Gew.-%, bevorzugt von 2 Gew.-% bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

Um Isocyanuratstrukturen im Schaum entstehen zu lassen beträgt die Kennzahl bevorzugt zwischen 160 und 500, besonders bevorzugt zwischen 160 und 400, insbesondere zwischen 165 und 300, ganz besonders bevorzugt zwischen 170 und 250, ganz bevorzugt zwischen 180 und 250.

Die Gesamtrohdichte (Gesamtmenge Schaum bezogen auf Hohlvolumen der Muffe) nach DIN EN ISO 845 des Polyurethanschaumstoffes, der Isocyanuratstrukturen enthält, beträgt bevorzugt zwischen 60 kg/m³ und 500 kg/m³, besonders bevorzugt zwischen 80 kg/m³ und 400 kg/m³, insbesondere zwischen 90 und 300 kg/m³, ganz besonders bevorzugt zwischen 100 kg/m³ und 250 kg/m³. Unter Gesamtrohdichte ist hier die Rohdichteverteilung über den in dem von dem offenzelligen Hartschaumstoff eingenommen Raumvolumen gemeint.

In einer besonders bevorzugten Ausführungsform ist der Polyurethanhartschaumstoff mit Isocyanuratstrukturen das Reaktionsprodukt aus einer Polyol-Komponente B und einer Isocyanat-Komponente A. Die Polyolkomponente umfasst zumindest 45 bis 55 Gewichtsanteilen Polyol A, 15 bis 35 Gewichtsanteilen Polyol B und 10 bis 30 Gewichtsanteile Polyol C, 1,5 bis 4 Gewichtsanteile Zellregulator, bevorzugt Ortegol 501 der Fa. Goldschmidt in der Zusammensetzung des Jahres 2009, 0,2 bis 0,8 Gewichtsanteile eines aminischen Katalysators, bevorzugt N,N-Dimethylcyclohexylamin, 0,02 bis 0,3 Gewichtsanteile eines Trimerisierungskatalysators, bevorzugt Kaliumacetat und 0,2 bis 1 Gewichtsanteil Wasser wobei sich alle Gewichtsanteile der zu dieser PolyolKomponente B gegebenen Bestanteile zu 100 addiert. Die Polyole A, B und C werden in dem Beispiel näher beschrieben.

Die Isocyanat-Komponente A dieser bevorzugten Ausführungsform umfasst zumindest eines der oben genannten Isocyanate, bevorzugt Polymer-MDI, das bevorzugt in Gewichtsanteilen von 105 bis 130, bevorzugt 110 bis 125, besonders bevorzugt von 114 bis 118 zu den 100 Gewichtsanteilen der Polyol-Komponente B gegeben wird.

Mit den aus dem Stand der Technik bekannten Systemen konnte zwar der "Impact Test" (genau: DNV-RP-F111 - rechteckiger Hammerkopf) bestanden werden, jedoch nur mit einer höheren Gesamtrohdichte des Schaumes. In der genannten besonders bevorzugten Ausführungsform halten die erfindungsgemäßen Schäume im "Impact-Test" einem "Impact" von 7 KJ mit einer Rohdichte von 120 kg/m³ stand. Die aus dem Stand der Technik bekannten Schäume benötigen 160 kg/m³. Dagegen halten die erfindungsgemäßen Schäume 12 kJ bei 160 kg/m³ aus. Die aus dem Stand der Technik bekannten Schäume nicht. Alle Impact-Werte gelten für die Durchführung des Testes ohne Hülle.

Dem erfindungsgemäßen Polyurethansystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Füllstoffe, Farbstoffe, Pigmente, Flammschutzmittel, Antistatika, Hydrolyseschutzmittel und/oder fungistatisch und bakteriostatisch wirkende Substanzen.

Weiterer Erfindungsgegenstand ist das Verfahren zum Umschäumen einer Röhrenverbindung (8), die aus mindestens zwei miteinander verbundenen Röhren (1) oder Teilen hiervon besteht, wobei man in dem an die Verbindungsstelle der Röhren angrenzenden Verbindungsbereich, eine äußere Hülle so platziert, dass ein Hohlraum zwischen äußeren Hülle und den verbundenen Röhren oder Röhrenteilen im Verbindungsbereich entsteht in dem dann ein offenzelliger Polyurethanhartschaumstoff mit Isocyanuratstrukturen hergestellt wird. Bevorzugt werden die bereits oben ausgeführten Polyurethanschaumstoffe mit den dort angegebenen Zusammensetzungen verwendet. Weiter bevorzugt wird vor dem Umschäumen der Röhrenverbindung die im Verbindungsbereich ggf. fehlende Antikorrosionsbeschichtung (2) durch die Antikorrosionsbeschichtung (5) ergänzt.

In einer bevorzugten Ausführungsform sind die verbundenen Röhren, zumindest in dem an den Verbindungsbereich angrenzendem Bereich, von einem Mantel (3) umgeben und eine äußere Hülle (4) so über den Verbindungsbereich und den Mantel befestigt wird, dass im Verbindungsbereich (9) ein Hohlraum entsteht, der innen durch Röhren (1) und deren Verbindung (8), seitlich durch den Mantel (3) der Röhren und nach außen durch die äußere Hülle begrenzt wird (4).

In diesen Hohlraum wird ein System eingefüllt, das zu einem offenzelligen Hartschaumstoff aushärtet. Es handelt sich bei diesem System um eine System zur Herstellung von Polyurethanschaumstoff mit Isocyanpuratstrukturen, das bevorzugt zumindest eine A-Komponente aus Polyisocyanat (a) und eine B-Komponente einer mit Polyisocyanat reaktiven Verbindung (b) besteht und bevorzugt unmittelbar vor dem Füllen des Hohlraumes durch Vermischen der A-Komponente und der B-Komponente hergestellt wird.

Weiter bevorzugt enthält die Hülle (4) bevorzugt auf ihrer Oberseite zumindest ein Einfüllloch (6) und ebenfalls bevorzugt auf der Oberseite zumindest ein Entlüftungsloch (7) aus dem die beim Einfüllen des Systems und der Ausbildung des offenzelligen Hartschaumstoffs verdrängte Luft aus dem Hohlraum entweichen kann.

In einer weiter bevorzugten Ausführungsform ist die äußere Hülle so beschaffen, dass sie nach Herstellung des offenzelligen Hartschaumstoffs wieder entfernt werden kann. Weiter bevorzugt wird die Hülle mit einem Trennmittel beschichtet oder mit einer sehr dünnen Folie, die ein Verkleben der Hülle mit dem Hartschaumstoff verhindert und so das Abtrennen der Hülle erleichtert.

Ein weiterer Gegenstand der Erfindung ist die Verwendung von offenzelligen Polyurethanschäumen mit Isocyanuratstruktur für die Umhüllung von Röhren, insbesondere zur Umhüllung der Verbindungsstelle mindestens zweier Röhren. Bevorzugt handelt es sich dabei um Röhren die zum Transport von Medien, bevorzugt von Gasen oder Flüssigkeiten, weiter bevorzugt von Erdöl oder Erdgas, besonders bevorzugt von Gasen, insbesondere von Erdgas verwendet werden.

In weiter bevorzugten Ausführungsformen sind die Röhren unter einer Wasseroberfläche verlegt, besonders bevorzugt sind die Röhren in Gewässern verlegt in denen Fischfang mit Schleppnetzen betrieben wird.

Im Folgenden wird die Erfindung durch eine Beispiel veranschaulicht, das zur Veranschaulich des Erfindungsgegenstandes dient, aber in keiner Weise eine Einschränkung der Erfindung darstellt.

### Beispiel

Die Komponente B, mit Polyisocyanat reaktiver Verbindung (b) basierte auf folgender Polyolmischung:

| Polyol-Typ | OH-Zahl | Funktionalität | Viskosität [25°C] | Molekulargewicht |
|---|---|---|---|---|
| Polyol A | 403 mg KOH/g | 3,9 | 2200 | 545 |
| Polyol B | 42 mg KOH/g | 2,7 | 950 | 3550 |
| Polyol C | 104 mg KOH/g | 2 | 155 | 1070 |

| | | | | |
|---|---|---|---|---|
| Polyol A basiert auf auf Saccharose, Pentaerythrit, Diethylenglykol und Propylenoxid. Polyol B basiert auf Glycerin, Propylenoxid und Ethylenoxid. Polyol C basiert auf Propylenglykol und Propylenoxid. | | | | |

| Rezeptur | |
|---|---|
| Stoff | Gewichtsanteil |
| Polyol A | 49,72 |
| Polyol B | 25 |
| Polyol C | 20 |
| Zellregulatoren (z.B. Ortegol 501 Fa. Goldschmidt) | 4 |
| N,N-Dimethylcyclohexylamine (DMCHA) | 0,5 |
| Kaliumacetat | 0,08 |
| Wasser | 0,7 |
| Lupranat M 20S (Polymer-MDI) | 116 |
| Isocyanat-Index | 160 |

Zunächst wird die Polyolkomponente mit den Polyolen A, B und C, dem Zellregulator, DMCHA und Kaliumacetat sowie Wasser vermischt (Komponente B). Zu dieser Komponente B wird dann als Komponente A ein Polymer-MDI gegeben, der Ansatz gut mit einer handelsüblichen Hochdruckanlage vermischt und über das Einfüllloch in einen vorgesehenen Hohlraum gefüllt. Dieser Hohlraum ergibt sich an einer verschweißten Rohrverbindung, deren Rohre (Durchmesser 48") mit einem Betonmantel umgeben sind. Als umgebende Hülle wird ein Metallblech verwendet, welches mittel dreier Spanngurte jeweils auf den Betonenden der Rohre und zusätzlich in der Mitte des Blechs festgezurrt ist. Durch das Blech ergibt sich ein Verbindungsbereich mit einer Dicke von 90 mm und einer Breite von 60 cm. Der Schaum steigt im Muffenhohlraum auf und füllt diesen innerhalb der Abbindezeit des Schaumes vollständig aus. Mit beginnendem Schaumaustritt werden das Einfüll-, sowie das Entlüftungsloch verschlossen, um ein weiteres Ausfließen des Schaumes aus dem Muffenhohlraum zu vermeiden. Es ergibt sich eine Gesamtrohdichte von 162 kg/m³.
Die Muffe wurde (ohne Blech) dem Impact Test nach DNV-RP-F111 mit einem rechteckigen Hammer unterzogen und widerstand einem Impact von 12 kJ ohne eine Beschädigung des Antikorrosionscoatings auf dem Stahlrohr.

## Patentansprüche

1. Verbindung von mindestens zwei Röhren oder Teilen hiervon mit einem an die Verbindung angrenzenden Verbindungsbereich der Röhren, **dadurch gekennzeichnet, dass** der Verbindungsbereich, von einem offenzelligen Hartschaumstoff umhüllt ist,
**dadurch gekennzeichnet, dass** es sich bei dem Hartschaumstoff um Polyurethanschaumstoff mit Isocyanuratstrukturen handelt.

2. Verbindung gemäß Anspruch 1, **dadurch gekennzeichnet, dass** der Polyurethanschaumstoff das Reaktionsprodukt zumindest folgender Komponenten ist:
(i) Polyisocyanat (a)
(ii) mit Polyisocyanat reaktive Verbindung (b), bestehend aus (iia) Katalysator (b2) enthaltend zumindest einen Trimerisierungskatalysator (b2b)
(iib) Zellregulierer (b3)
(iic) chemische und/oder physikalische Treibmittel (b4)
sowie
(iid) gegebenenfalls Vernetzer (b5)
(iie) gegebenenfalls Kettenverlängerer (b6).

3. Verbindung gemäß Anspruch 2, **dadurch gekennzeichnet, dass** die Reaktion der Komponenten (a) und (b) bei einer Isocyanat-Kennzahl zwischen 160 und 500 , weiter bevorzugt zwischen 160 und 400 und besonders bevorzugt zwischen 165 und 300 erfolgt.

4. Verbindung nach mindestens einem der Ansprüche 2 oder 3, **dadurch gekennzeichnet, dass** das Polyisocyanat ein Gemisch ist, das Diphenylmethandiisocyanat und Polyphenylenpolymethylenpolyisocyanat enthält.

5. Verbindung nach mindestens einem der Ansprüche 2 bis 4, **dadurch gekennzeichnet, dass** die Summe der Polyisocyanate so gewählt ist, dass deren Viskosität von 110 bis 600, bevorzugt von 120 bis 400, besonders bevorzugt von 180 bis 320 mPas, gemessen nach DIN 53019 bei 25°C, beträgt.

6. Verbindung gemäß mindestens einem der Ansprüche 2 bis 5, **dadurch gekennzeichnet, dass** es sich bei der mindestens einen mit Polyisocyanat reaktiven Verbindung um Polyol handelt.

7. Verbindung gemäß Anspruch 6, **dadurch gekennzeichnet, dass** die mit Polyisocyanat reaktive Verbindung (b) eine Viskosität, gemessen bei 25°C von 0,11 bis 6 Pa*s, bevorzugt von 0,2 bis 4 Pa*s, besonders bevorzugt 0,3 bis 3 mPa*s, ganz besonders bevorzugt 0,3 bis 2 mPa*s aufweist.

8. Verbindung gemäß mindestens einem der Ansprüche 6 oder 7, , **dadurch gekennzeichnet, dass** die Hydroxylzahl der Komponente, jedoch ohne das gegebenenfalls zugesetzte chemische Treibmittel (b4) zwischen 70 und 600 mg KOH/g, bevorzugt zwischen 100 und 500 mg KOH/g, weiter bevorzugt zwischen 150 und 400 mg KOH/g und besonders bevorzugt zwischen 200 und 350 mg KOH/g liegt.

9. Verbindung gemäß mindestens einem der Ansprüche 6 bis 8, **dadurch gekennzeichnet, dass** die Funktionalität der Summe der Polyole zwischen 1,9 und 8 liegt, bevorzugt zwischen 2,2 und 6, weiter bevorzugt zwischen 2,3 und 5.

10. Verbindung gemäß mindestens einem der Ansprüche 3 bis 10, **dadurch gekennzeichnet, dass** der Trimerisierungskatalysator (b3) ausgewählt ist aus Kaliumacetat, Kaliumformiat und Kaliumoctoat.

11. Verbindung gemäß mindestens einem der Ansprüche 1 bis 10, **dadurch gekennzeichnet, dass** der Verbindungsbereich jeden Rohres 5 cm bis 80 cm breit ist, jeweils gemessen von der Stelle der Verbindung der Rohre in axialer Richtung.

12. Verbindung gemäß mindestens einem der Ansprüche 1 bis 11, **dadurch gekennzeichnet, dass** zumindest eine Röhre aus Metall besteht, das zumindest auf der Außenseite eine Antikorrosionsbeschichtung aufweist und von einer mineralischen Umhüllung umgeben ist.

13. Röhrensystem, enthaltend mindestens eine Verbindung gemäß einem der Ansprüche 1 bis 12.

14. Verfahren zum Umschäumen einer Röhrenverbindung, die aus mindestens zwei miteinander verbundenen Röhren oder Teilen hiervon besteht, **dadurch gekennzeichnet, dass** man in dem an die Verbindungsstelle der Röhren angrenzenden Verbindungsbereich, eine äußere Hülle so platziert, dass ein Hohlraum zwischen äußeren Hülle und den verbundenen Röhren oder Röhrenteilen im Verbindungsbereich entsteht in dem dann ein offenzelliger Hartschaum hergestellt wird, und wobei es sich bei dem Hartschaumstoff um Polyurethanschaumstoff mit Isocyanuratstrukturen handelt.

15. Verfahren gemäß Anspruch 14, **dadurch gekennzeichnet, dass** die Röhren, zumindest in dem an den Verbindungsbereich angrenzendem Bereich, von eine Mantel (3) umgeben ist und eine äußere Hülle so über den Verbindungsbereich und den Mantel befestigt wird, dass im Verbindungsbereich ein Hohlraum entsteht, der innen durch die Verbindung und den Verbindungsbereich der Röhren, seitlich durch die Ummantelung der Röhren und nach außen durch die äußere Hülle begrenzt wird.

16. Verfahren gemäß einem der Ansprüche 14 bis 15, **dadurch gekennzeichnet, dass** man eine äußere Hülle verwendet die nach Herstellung des offenzelligen Hartschaumstoffs wieder entfernt werden kann.

## Claims

1. A connection of at least two pipes or parts thereof having a connection region of the pipes adjoining the connection, wherein the connection region is enveloped by an open-celled rigid foam, wherein the rigid foam is a polyurethane foam having isocyanurate structures.

2. The connection according to claim 1, wherein the polyurethane foam is the reaction product of at least the following components:
(i) polyisocyanate (a)
(ii) compound (b) which is reactive toward polyisocyanate and comprises
(iia) catalyst (b2) comprising at least one trimerization catalyst (b2b)
(iib) cell regulators (b3)
(iic) chemical and/or physical blowing agents (b4)
and
(iid) optionally crosslinkers (b5)
(iie) optionally chain extenders (b6).

3. The connection according to claim 2, wherein the reaction of the components (a) and (b) is carried out at an isocyanate index in the range from 160 to 500, more preferably from 160 to 400 and particularly preferably from 165 to 300.

4. The connection according to at least one of claims 2 and 3, wherein the polyisocyanate is a mixture comprising diphenylmethane diisocyanate and polyphenylenepolymethylene polyisocyanate.

5. The connection according to at least one of claims 2 to 4, wherein the sum of the polyisocyanates is selected so that their viscosity is from 110 to 600 mPas, preferably from 120 to 400 mPas, particularly preferably from 180 to 320 mPas, measured in accordance with DIN 53019 at 25°C.

6. The connection according to at least one of claims 2 to 5, wherein the at least one compound which is reactive toward polyisocyanate is a polyol.

7. The connection according to claim 6, wherein the compound (b) which is reactive toward polyisocyanate has a viscosity measured at 25°C of from 0.11 to 6 Pa*s, preferably from 0.2 to 4 Pa*s, particularly preferably from 0.3 to 3 mPa*s, very particularly preferably from 0.3 to 2 mPa*s.

8. The connection according to at least one of claims 6 and 7, wherein the hydroxyl number of the component without any chemical blowing agent (b4) added is in the range from 70 to 600 mg KOH/g, preferably from 100 to 500 mg KOH/g, more preferably from 150 to 400 mg KOH/g and particularly preferably from 200 to 350 mg KOH/g.

9. The connection according to at least one of claims 6 to 8, wherein the functionality of the sum of the polyols is in the range from 1.9 to 8, preferably from 2.2 to 6, more preferably from 2.3 to 5.

10. The connection according to at least one of claims 3 to 10, wherein the trimerization catalyst (b3) is selected from among potassium acetate, potassium formate and potassium octoate.

11. The connection according to at least one of claims 1 to 10, wherein the connection region of each pipe has a width of from 5 cm to 80 cm, in each case measured from the point of connection of the pipes in the axial direction.

12. The connection according to at least one of claims 1 to 11, wherein at least one pipe is composed of metal and has an anticorrosion coating at least on the outside and is surrounded by a mineral enveloping material.

13. A pipe system comprising at least one connection according to any of claims 1 to 12.

14. A method of enveloping a pipe connection comprising at least two pipes or parts thereof connected to one another with foam, wherein an outer sheath is placed in the connection region adjoining the connection point of the pipes in such a way that a hollow space arises in the connection region between the outer sheath and the connected pipes or pipe sections and an open-celled rigid foam is then produced in this hollow space, and the rigid foam is a polyurethane foam having isocyanurate structures.

15. The method according to claim 14, wherein the pipes are, at least in the region adjoining the connection region, surrounded by a jacket (3) and an outer sheath is fastened over the connection region and the jacket so as to form a hollow space which is bounded on the inside by the connection and the connection region of the pipes, laterally by the jacket of the pipes and on the outside by the outer sheath in the connection region.

16. The method according to either claim 14 or 15, wherein an outer sheath which can be removed again after production of the open-celled rigid foam is used.

## Revendications

1. Connexion d'au moins deux tubes ou de parties de ceux-ci comprenant une zone de connexion des tubes adjacente à la connexion, **caractérisée en ce que** la zone de connexion est enveloppée par une mousse dure à cellules ouvertes,
**caractérisée en ce que** la mousse dure est une mousse de polyuréthane à structures isocyanurate.

2. Connexion selon la revendication 1, **caractérisée en ce que** la mousse de polyuréthane est le produit de réaction d'au moins les composants suivants :
(i) un polyisocyanate (a),
(ii) avec un composé (b) réactif avec les polyisocyanates, constitué par
(iia) un catalyseur (b2) contenant au moins un catalyseur de trimérisation (b2b),
(iib) un régulateur cellulaire (b3)
(iic) des agents gonflants chimiques et/ou physiques (b4) et
(iid) éventuellement un agent de réticulation (b5),
(iie) éventuellement un allongeur de chaîne (b6).

3. Connexion selon la revendication 2, **caractérisée en ce que** la réaction des composants (a) et (b) a lieu à un indice d'isocyanate compris entre 160 et 500, de manière davantage préférée entre 160 et 400 et de manière particulièrement préférée entre 165 et 300.

4. Connexion selon au moins l'une quelconque des revendications 2 ou 3, **caractérisée en ce que** le polyisocyanate est un mélange qui contient du diisocyanate de diphénylméthane et du polyisocyanate de polyphénylène-polyméthylène.

5. Connexion selon au moins l'une quelconque des revendications 2 à 4, **caractérisée en ce que** la somme des polyisocyanates est choisie de manière à ce que leur viscosité soit de 110 à 600, de préférence de 120 à 400, de manière particulièrement préférée de 180 à 320 mPas, mesurée selon DIN 53019 à 25 °C.

6. Connexion selon au moins l'une quelconque des revendications 2 à 5, **caractérisée en ce que** le ou les composés réactifs avec les polyisocyanates sont un polyol.

7. Connexion selon la revendication 6, **caractérisée en ce que** le composé (b) réactif avec les polyisocyanates présente une viscosité, mesurée à 25 °C, de 0,11 à 6 Pa*s, de préférence de 0,2 à 4 Pa*s, de manière particulièrement préférée de 0,3 à 3 mPa*s, de manière tout particulièrement préférée de 0,3 à 2 mPa*s.

8. Connexion selon au moins l'une quelconque des revendications 6 ou 7, **caractérisée en ce que** l'indice hydroxyle du composant, toutefois sans les agents gonflants chimiques éventuellement ajoutés (b4), est compris entre 70 et 600 mg KOH/g, de préférence entre 100 et 500 mg KOH/g, de manière davantage préférée entre 150 et 400 mg KOH/g et de manière particulièrement préférée entre 200 et 350 mg KOH/g.

9. Connexion selon au moins l'une quelconque des revendications 6 à 8, **caractérisée en ce que** la fonctionnalité de la somme des polyols est comprise entre 1,9 et 8, de préférence entre 2,2 et 6, de manière davantage préférée entre 2,3 et 5.

10. Connexion selon au moins l'une quelconque des revendications 3 à 10, **caractérisée en ce que** le catalyseur de trimérisation (b3) est choisi parmi l'acétate de potassium, le formiate de potassium et l'octoate de potassium.

11. Connexion selon au moins l'une quelconque des revendications 1 à 10, **caractérisée en ce que** la zone de connexion de chaque tube est d'une largeur de 5 cm à 80 cm, à chaque fois mesurée à partir de l'emplacement de la connexion des tubes dans la direction axiale.

12. Connexion selon au moins l'une quelconque des revendications 1 à 11, **caractérisée en ce qu'**au moins un tube est en métal, qui comprend au moins sur le côté extérieur un revêtement anticorrosion et est entouré par une enveloppe minérale.

13. Système de tubes, contenant au moins une connexion selon l'une quelconque des revendications 1 à 12.

14. Procédé d'enrobage par moussage d'une connexion de tubes, constituée par au moins deux tubes ou parties de ceux-ci reliés l'un avec l'autre, **caractérisé en ce qu'**une enveloppe extérieure est placée dans la zone de connexion adjacente à l'emplacement de connexion des tubes de manière à former une cavité entre l'enveloppe extérieure et les tubes ou parties de tubes reliés dans la zone de connexion, dans laquelle une mousse dure à cellules ouvertes est alors fabriquée, la mousse dure étant une mousse de polyuréthane à structures isocyanurate.

15. Procédé selon la revendication 14, **caractérisé en ce que** les tubes sont entourés par une gaine (3), au moins dans la zone adjacente à la zone de connexion, et une enveloppe extérieure est fixée au-dessus de la zone de connexion et de la gaine, de manière à former une cavité dans la zone de connexion, qui est délimitée à l'intérieur par la connexion et la zone de connexion des tubes, latéralement par la gaine des tubes et vers l'extérieur par l'enveloppe extérieure.

16. Procédé selon l'une quelconque des revendications 14 à 15, **caractérisé en ce qu'**une enveloppe extérieure qui peut être retirée après la fabrication de la mousse dure à cellules ouvertes est utilisée.
